# EUROPÄISCHE PATENTANMELDUNG

(11) **EP 3 560 575 A1**
(43) Veröffentlichungstag der Anmeldung: **30.10.2019**
(21) Anmeldenummer: 18169157.7
(22) Anmeldetag: 25.04.2018
(51) Int. Cl.: B01D 53/86, B01D 53/90

(54) **RAUCHGASENTSTICKUNGSVERFAHREN UND ZUR DURCHFÜHRUNG DES VERFAHRENS GEEIGNETE RAUCHGASENTSTICKUNGSANLAGE ZUR INTEGRATION IN EIN RAUCHGAS ERZEUGENDES KRAFTWERK**

(71) Anmelder: Mitsubishi Hitachi Power Systems Europe GmbH, 47059 Duisburg (DE)
(72) Erfinder: KERSKEN, Ulrich, 46149 Oberhausen (DE); HASLACH, Hubert, 40668 Meerbusch (DE); PAPENHEIM, Georg, 47647 Kerken (DE); VOLLMER, Bernd, 47800 Krefeld (DE); WENDE, Michael, 40489 Düsseldorf (DE)
(74) Vertreter: Viering, Jentschura & Partner mbB Patent- und Rechtsanwälte

(57) **Zusammenfassung**

Bei einem Rauchgasentstickungsverfahren, bei welchem ein in einem Rauchgaskanal (120) strömender Rohgas-Rauchgasmassenstrom (121) eines mit einem kohlenstoffhaltigen Brennstoff befeuerten Kessels oder Dampferzeugers (110) eines Kraftwerks (100) rauchgasausgangsseitig des Kessels oder Dampferzeugers (110) in einem, insbesondere selektiv katalytisch arbeitenden, Rauchgasentstickungsreaktor (210) entstickt wird, wobei rauchgasausgangsseitig des Kessels oder Dampferzeugers (110) und in Rauchgasströmungsrichtung (R) stromaufwärts des Rauchgasentstickungsreaktors (210) mittels einer Reduktionsmittel-Einspeisung (240) Reduktionsmittel (221), insbesondere ein Ammoniak oder Harnstoff aufweisendes Reduktionsmittel (221), in den in dem Rauchgaskanal (120) strömenden Rohgas-Rauchgasmassenstrom (121) eingeleitet und/oder eingedüst wird, soll eine Lösung geschaffen werden, die es ermöglicht, eine gute Vermischung von Rauchgas und Reduktionsmittel betriebsmittelschonend, insbesondere ohne zusätzlichen Betriebsmittelverbrauch und ohne zusätzliche Anlagenkomponenten, zu realisieren.

Dies wird dadurch erreicht, dass das Reduktionsmittel (221) als Bestandteil eines vorgewärmten Verbrennungsluft-Teilstroms (231) in den in dem Rauchgaskanal (120) strömenden Rohgas-Rauchgasmassenstrom (121) eingeleitet und/oder eingedüst wird, wobei der Verbrennungsluft-Teilstrom (231) aus einer oder mehreren Luftvorwärmeinheiten (130, 130'), die in einem dem Kessel oder Dampferzeuger (110) Verbrennungsluft (141) zuführenden Verbrennungsluftkanal (140) angeordnet sind, oder in Luftströmungsrichtung (L) stromabwärts dieser einen oder mehreren Luftvorwärmeinheiten (130, 130') aus einem vorgewärmten Verbrennungsluftstrom (142) abgezweigt wird.

## Beschreibung

Die Erfindung richtet sich auf ein Rauchgasentstickungsverfahren, bei welchem ein in einem Rauchgaskanal strömender Rohgas-Rauchgasmassenstrom eines mit einem kohlenstoffhaltigen Brennstoff befeuerten Kessels oder Dampferzeugers eines Kraftwerks rauchgasausgangsseitig des Kessels oder Dampferzeugers in einem, insbesondere selektiv katalytisch arbeitenden, Rauchgasentstickungsreaktor entstickt wird, wobei rauchgasausgangsseitig des Kessels oder Dampferzeugers und in Rauchgasströmungsrichtung stromaufwärts des Rauchgasentstickungsreaktors mittels einer Reduktionsmittel-Einspeisung Reduktionsmittel, insbesondere ein Ammoniak oder Harnstoff aufweisendes Reduktionsmittel, in den in dem Rauchgaskanal strömenden Rohgas-Rauchgasmassenstrom eingeleitet und/oder eingedüst wird.

Weiterhin richtet sich die Erfindung auf eine Rauchgasentstickungsanlage, die, zur Durchführung des voranstehenden Verfahrens geeignet ist und in ein Rauchgas erzeugendes Kraftwerk integriert ist, umfassend einen, insbesondere selektiv katalytisch arbeitenden Rauchgasentstickungsreaktor, der rauchgasausgangsseitig zu einem mit einem kohlenstoffhaltigen Brennstoff befeuerbaren oder befeuerten Kessel oder Dampferzeuger des Kraftwerks angeordnet ist, eine zur Zuführung eines Reduktionsmittels, insbesondere eines Ammoniak oder Harnstoff enthaltenden Reduktionsmittels, vorgesehene Reduktionsmittelleitung und eine, in Rauchgasströmungsrichtung stromaufwärts des Rauchgasentstickungsreaktors angeordnete Reduktionsmittel-Einspeisung zur Einleitung und/oder Eindüsung des Reduktionsmittels in einen zur fluidleitenden Verbindung zwischen dem Kessel oder Dampferzeuger und dem Rauchgasentstickungsreaktor ausgebildeten Rauchgaskanal.

Insbesondere an fossilen Verbrennungsanlagen, wozu beispielsweise auch mit staubförmigem, kohlenstoffhaltigem, insbesondere fossilem, Brennstoff befeuerte Kessel oder Dampferzeuger von Kraftwerken gehören, entsteht ein Abgas, das staubhaltig ist, Kohlendioxid (CO₂), Schwermetalle wie Quecksilber, aber auch die unter der Bezeichnung Stickoxide (NOₓ) zusammengefassten Gase Stickstoffmonoxid (NO) und Stickstoffdioxid (NO₂) enthält.

Gerade im Rahmen von Umweltschutzmaßnahmen bestehen seit längerer Zeit Bestrebungen, die Emission von im Abgas enthaltenen Schadstoffen und damit die diesbezüglichen Emissionsschadstoffwerte weiter zu reduzieren.

Im Rahmen dieser Bestrebungen stellen die einzuhaltenden und weiter zu reduzierenden NOₓ-Werte eine zu beachtende Komponente dar. Neben den primären Maßnahmen zur Reduzierung der NOₓ-Emissionen im Feuerraum des Kessels oder Dampferzeugers, die bereits die Entstehung von NOx möglichst verhindern sollen, werden als sekundäre Maßnahmen vielfach katalytisch entstickende Rauchgasentstickungsanlagen mit Rauchgasentstickungsreaktoren eingesetzt, die nach dem sogenannten SCR (Selective Catalytic Reduction) Verfahren arbeiten. Bei dem SCR-Verfahren wird ein Reduktionsmittel, insbesondere ein Ammoniak (NH₃) oder Harnstoff (CH₄N₂O) enthaltendes Reduktionsmittel, wie Ammoniakwasser (NH₄OH) oder eine wässrige Harnstofflösung in einen die Abgase enthaltenden Rauchgasstrom, welcher aus dem Kessel oder dem Dampferzeuger austritt, eingedüst und an Katalysatoren chemisch in Stickstoff (N₂) und Wasser (H₂O) umgesetzt.

Zumeist werden derartige, katalytisch arbeitende Rauchgasentstickungsreaktoren umfassende, Rauchgasentstickungsanlagen rauchgasausgangsseitig dem Kessel oder Dampferzeuger unmittelbar nachgeschaltet, da das dort austretende Rauchgas eine für die Durchführung der selektiven katalytischen Reduktion vorteilhaft hohe Temperatur aufweist. Die Eindüsung des Reduktionsmittels erfolgt zweckmäßigerweise bevor das Rauchgas den Rauchgasentstickungsreaktor durchläuft.

Zur Eindüsung des Reduktionsmittels sind aus dem Stand der Technik prinzipiell zwei Verfahrensvarianten bekannt. Eine erste Variante besteht darin, das Reduktionsmittel in flüssigem Aggregatzustand in den Rauchgaskanal einzudüsen. Beim Verlassen des Kessels oder Dampferzeugers beträgt die Rauchgastemperatur ca. 300 °C - 400 °C, sodass das flüssig eingedüste Reduktionsmittel durch die im Rauchgasstrom enthaltene Wärmeenergie verdampft wird. Um eine rasche Verdampfung und eine gleichmäßige Vermischung des eingedüsten Reduktionsmittel-Sprays mit den im Rauchgasstrom enthaltenen Abgasen zu erhalten, ist eine möglichst geringe Tröpfchengröße vorteilhaft. Zusätzlich können Verwirbelungsmittel, insbesondere Mischer, zur gleichmäßigeren Verteilung eingesetzt werden. Eine homogenere Vermischung lässt sich mittels einer zweiten Variante erzielen, bei welcher das Reduktionsmittel in einer externen bzw. einer vorgeschalteten Verdampfungseinheit zunächst verdampft und verdünnt sowie anschließend dampf- und/oder gasförmig in den Rauchgaskanal eingedüst wird. Nachteilig an dieser Verfahrensvariante ist, dass zur externen Verdampfung des Reduktionsmittels zusätzliche Betriebsmittel wie beispielsweise Hilfsdampf oder elektrische Energie benötigt werden. Auch der aus dem Kessel oder Dampferzeuger austretende Rauchgasstrom kann zur externen Reduktionsmittelverdampfung genutzt werden. In diesem Fall sind jedoch zusätzliche Anlagenkomponenten, wie Wärmetauscher, zwingend vorzusehen.

Der Erfindung liegt daher die Aufgabe zugrunde, eine Lösung zu schaffen, die es ermöglicht, eine gute Vermischung von Rauchgas und Reduktionsmittel betriebsmittelschonend, insbesondere ohne zusätzlichen Betriebsmittelverbrauch und ohne zusätzliche Anlagenkomponenten, zu realisieren.

Hierbei soll zudem eine Erhitzung und/oder Verdampfung des Reduktionsmittels und/oder eines dieses aufnehmenden und dann mit sich führenden Trägermediums realisierbar sein.

Bei einem Verfahren der eingangs näher bezeichneten Art wird diese Aufgabe erfindungsgemäß dadurch gelöst, dass das Reduktionsmittel als Bestandteil eines vorgewärmten Verbrennungsluft-Teilstroms in den in dem Rauchgaskanal strömenden Rohgas-Rauchgasmassenstrom eingeleitet und/oder eingedüst wird, wobei der Verbrennungsluft-Teilstrom aus einer oder mehreren Luftvorwärmeinheiten, die in einem dem Kessel oder Dampferzeuger Verbrennungsluft zuführenden Verbrennungsluftkanal angeordnet sind, oder in Luftströmungsrichtung stromabwärts dieser Luftvorwärmeinheit aus einem vorgewärmten Verbrennungsluftstrom abgezweigt wird.

Ebenso wird die vorstehende Aufgabe bei einer Rauchgasentstickungsanlage der vorstehend näher bezeichneten Art dadurch gelöst, dass zwischen der Reduktionsmittel-Einspeisung und einer oder mehreren in einem zur Zuführung von Verbrennungsluft zu dem Kessel oder Dampferzeuger ausgebildeten Verbrennungsluftkanal angeordneten Luftvorwärmeinheiten oder zwischen der Reduktionsmittel-Einspeisung und dem Verbrennungsluftkanal, in Luftströmungsrichtung stromabwärts dieser einen oder mehreren Luftvorwärmeinheiten, eine fluidleitende Verbrennungsluft-Teilstromleitung ausgebildet ist, die zur Zuführung des Reduktionsmittels als Bestandteil eines vorgewärmten Verbrennungsluft-Teilstroms mit der Reduktionsmittelleitung in fluidleitender Verbindung steht.

Vorteilhafte Ausgestaltungen und zweckmäßige Weiterbildungen der Erfindung sind Gegenstand der jeweiligen Unteransprüche.

Erfindungsgemäß ist somit vorgesehen, die im Kraftwerksprozess ohnehin zur Verfügung stehende, vorgewärmte Verbrennungsluft, insbesondere die in dieser enthaltene Wärmeenergie und/oder kinetische Energie, zur Einleitung und/oder Eindüsung des für die Entstickung benötigten Reduktionsmittels zu nutzen, um auf zusätzliche Betriebsmittel wie Hilfsdampf und/oder elektrische Energie und/oder zusätzliche Anlagenkomponenten, wie Wärmetauscher zu verzichten.

In Verbrennungskraftanlagen, insbesondere mit fossilem, kohlenstoffhaltigem Brennstoff befeuerten Dampfkraftwerken, werden große Mengen an vorgewärmter Verbrennungsluft benötigt. Die für die Verbrennung notwendige Verbrennungsluft wird hierzu in einfacher Weise aus der Umgebung, vorzugsweise aus dem Kesselraum selbst, entnommen und mittels einer odermehrerer Luftvorwärmeinheiten, auch als Luftvorwärmer (LuVo) bezeichnet, auf eine für die Verbrennung zweckmäßige Betriebstemperatur erhitzt. Die vorgewärmte Verbrennungsluft tritt am jeweiligen Luftvorwärmeraustritt typischerweise mit Temperaturen zwischen 250°C - 350°C aus und wird über einen Verbrennungsluftkanal dem Kessel zugeführt. Von dieser auf 250°C - 350°C vorgewärmten Verbrennungsluft lässt sich nun ein geringer Volumenanteil in Form eines Verbrennungsluft-Teilstroms ohne feststellbare Prozessnachteile oder in den Kraftwerksbetrieb eingreifende Auswirkungen abzweigen. Hierzu kann der mittels der oder den Luftvorwärmeinheit(en) vorgewärmte Verbrennungsluft-Teilstrom entweder direkt aus der Luftvorwärmeinheit oder in Luftströmungsrichtung weiter stromabwärts der Luftvorwärmeinheit aus dem Verbrennungsluftkanal, in welchem die Luftvorwärmeinheit angeordnet ist, abgezweigt werden. Diesem Verbrennungsluft-Teilstrom lässt sich dann das Reduktionsmittel zuführen, sodass der Verbrennungsluft-Teilstrom als Trägermedium anschließend gemeinsam mit dem Reduktionsmittel, als dessen Bestandteil, in den in dem Rauchgaskanal strömenden Rohgas-Rauchgasmassenstrom eingeleitet und/oder eingedüst werden kann bzw. auch eingeleitet und/oder eingedüst wird.

Zur Abzweigung bzw. Entnahme des Verbrennungsluft-Teilstroms ist erfindungsgemäß eine Verbrennungsluft-Teilstromleitung vorgesehen, welche eine fluidleitende Verbindung zwischen der Luftvorwärmeinheit und dem Rauchgaskanal oder zwischen dem Verbrennungsluftkanal, in Luftströmungsrichtung stromabwärts der Luftvorwärmeinheit, und dem Rauchgaskanal ausbildet. Während des Betriebs des Kraftwerks, insbesondere eines mit fossilem, kohlenstoffhaltigem Brennstoff befeuerten Dampfkraftwerks, liegt im Rauchgaskanal typischerweise ein geringerer Druck als im Verbrennungsluftkanal und der darin angeordneten Luftvorwärmeinheit vor. Im Rahmen der Erfindung lässt sich dieser, während des Kraftwerksbetriebs ohnehin bestehende, Druckunterschied zur Erzeugung einer in Richtung des Rauchgaskanals gerichteten Strömung nutzen, indem eine fluidleitende Verbindung, eine Verbrennungsluft-Teilstromleitung, zwischen den Bereichen unterschiedlichen Drucks, geschaffen wird bzw. ausgebildet ist. Um das Reduktionsmittel mittels des folglich in Richtung des Rauchgaskanals strömenden Verbrennungsluft-Teilstroms zu fördern und als dessen Bestandteil in den Rauchgaskanal einzuleiten und/oder einzudüsen, ist eine fluidleitende Verbindung auch zwischen der Verbrennungsluft-Teilstromleitung und einer in einen Reduktionsmittelvorrat oder ein Reduktionsmitte-Reservoir, insbesondere einen Reduktionmitteltank, mündenden Reduktionsmittelleitung ausgebildet.

Das erfindungsgemäße Verfahren ist für alle Kraftwerke mit insbesondere fossilen Verbrennungsanlagen, wozu auch mit staubförmigem, kohlenstoffhaltigem Brennstoff befeuerte Dampferzeuger zählen, geeignet. Hierzu lässt sich eine erfindungsgemäße Rauchgasentstickungsanlage in ein bereits vorhandenes Kraftwerk integrieren, bzw. wird das Kraftwerk mit der erfindungsgemäßen Rauchgasentstickungsanlage nachgerüstet. Auch Kraftwerke mit einer bereits vorhandenen, aus dem Stand der Technik bekannten, Rauchgasentstickungsanlage können durch geeignete Umbaumaßnahmen mit der erfindungsgemäßen Rauchgasentstickungsanlage nachgerüstet und dem erfindungsgemäßen Rauchgasentstickungsverfahren betrieben werden. Selbstverständlich lässt sich bei einem Neubau eines Kraftwerks eine erfindungsgemäße Rauchgasentstickungsanlage bereits während der Bauphase baulich integrieren und das fertig gestellte Kraftwerk mit dem erfindungsgemäßen Rauchgasentstickungsverfahren betreiben.

Nach einer vorteilhaften Ausgestaltung der Erfindung ist weiterhin vorgesehen, dass mittels des vorgewärmten Verbrennungsluft-Teilstroms das dem Rohgas-Rauchgasmassenstrom zuzuführende Reduktionsmittel oder ein dem Rohgas-Rauchgasmassenstrom zuzuführender Reduktionsmittelmassenstrom an Reduktionsmittel verdampft und/oder verdünnt wird.

In Weiterbildung dieser Ausgestaltung kann es zweckmäßig sein, wenn das Reduktionsmittel oder der das Reduktionsmittel enthaltende Reduktionsmittelmassenstrom in den vorgewärmten Verbrennungsluft-Teilstrom eingeleitet und/oder eingedüst wird, wobei eine in dem vorgewärmten Verbrennungsluft-Teilstrom enthaltene Wärmeenergie direkt und unmittelbar an das Reduktionsmittel oder an den Reduktionsmittelmassenstrom des Reduktionsmittels übertragen wird und/oder das Reduktionsmittel oder der Reduktionsmittelmassenstrom verdünnt wird.

Hierbei ist es ebenfalls vorteilhaft, wenn das Reduktionsmittel oder der Reduktionsmittelmassenstrom des Reduktionsmittels vor der Einleitung und/oder Eindüsung in den Rohgas-Rauchgasmassenstrom mittels des vorgewärmten Verbrennungsluft-Teilstroms ganz oder teilweise verdampft und anschließend gas- und/oder dampfförmig über die Reduktionsmittel-Einspeisung in den in dem Rauchgaskanal strömenden Rohgas-Rauchgasmassenstrom eingeleitet und/oder eingedüst wird.

Durch die Einleitung und/oder Eindüsung des bereits verdampften Reduktionsmittels lässt sich eine besonders gute Vermischung mit dem im Rauchgaskanal strömenden Rohgas-Rauchgasmassenstrom erzielen. Indem die im Verbrennungsluft-Teilstrom enthaltene Wärmeenergie zur Verdampfung des Reduktionsmittels genutzt wird, kann auf andernfalls notwendige, zusätzliche Betriebsmittel wie Hilfsdampf oder elektrische Energie und/oder auf zusätzliche Anlagenbestandteile, wie beispielsweise einen Wärmetauscher zur Übertragung von im Rauchgas enthaltener Wärmeenergie verzichtet werden. Zur Verdampfung des Reduktionsmittels, insbesondere eines Ammoniak oder Harnstoff enthaltenden Reduktionsmittels, wie beispielsweise Ammoniakwasser oder eine wässrige Harnstofflösung, genügt eine Temperatur von etwa 120°C des Verbrennungsluft-Teilstroms. Indem die Übertragung der Wärmeenergie direkt und unmittelbar, d.h. ohne bauliche Trennung, zwischen dem Verbrennungsluft-Teilstrom und dem Reduktionsmittelmassenstrom des Reduktionsmittels stattfindet, ist diese besonders effektiv. Gleichzeitig kann eine Verdünnung des Reduktionsmittelmassenstroms durch den Verbrennungsluft-Teilstrom realisiert werden.

Nach einer vorteilhaften Verfahrensausgestaltung wird das dem Rohgas-Rauchgasmassenstrom zuzuführende Reduktionsmittel oder der dem Rohgas-Rauchgasmassenstrom zuzuführende Reduktionsmittelmassenstrom des Reduktionsmittels einer in Verbrennungsluft-Teilstrom-Strömungsrichtung stromaufwärts der Reduktionsmittel-Einspeisung angeordneten Verdampfungs- und/oder Zerstäubungseinheit zugeführt und in diese eingespritzt und/oder innerhalb dieser zerstäubt.

Hierbei ist außerdem vorteilhaft, dass auch der vorgewärmte Verbrennungsluft-Teilstrom in die Verdampfungs- und/oder Zerstäubungseinheit eingeleitet und/oder eingedüst wird und durch Inkontaktbringen mit dem der Verdampfungs- und/oder Zerstäubungseinheit zugeführten Reduktionsmittelmassenstrom das darin enthaltene Reduktionsmittel zerstäubt und/oder verdampft und/oder der Reduktionsmittelmassenstrom verdünnt wird.

Für eine rasche und vollständige Verdampfung ist es vorteilhaft, das flüssig in die Verdampfung-und/oder Zerstäubungseinheit eingeleitete Reduktionsmittel vor der Verdampfung zu zerstäuben und/oder ein Reduktionsmittel-Spray zu erzeugen. Dies kann beispielsweise durch eine Druckzerstäubung, indem der Reduktionsmittelmassenstrom unter Druck in die Verdampfungs- und/oder Zerstäubungseinheit eingedüst wird, oder durch eine Fremdmedienzerstäubung, bei welcher das Reduktionsmittel mittels des, insbesondere unter Druck, eingedüsten in Verbrennungsluft-Teilstroms eingedüst wird, realisiert sein.

Nach einer vorteilhaften Ausgestaltung des Verfahrens wird ein zwischen dem den Rohgas-Rauchgasmassenstrom führenden Rauchgaskanal und dem dem Kessel oder Dampferzeuger Verbrennungsluft zuführenden Verbrennungsluftkanal oder der einen oder den mehreren in dem Verbrennungsluftkanal angeordneten Luftvorwärmeinheiten bestehender Druckunterschied mittels einer den vorgewärmten Verbrennungsluft-Teilstrom fördernden Fördereinrichtung, insbesondere mittels eines Gebläses, örtlich erhöht und/oder ein bei der Einleitung und/oder Eindüsung des Verbrennungsluft-Teilstroms in die Verdampfungs- und/oder Zerstäubungseinheit auftretender Druckverlust und/oder Druckabfall ausgeglichen wird.

In zahlreichen Anwendungsfällen ist der grundsätzlich zwischen dem den Rohgas-Rauchgasmassenstrom führenden Rauchgaskanal und dem dem Kessel oder Dampferzeuger Verbrennungsluft zuführenden Verbrennungsluftkanal oder der in dem Verbrennungsluftkanal angeordneten mindestens einen Luftvorwärmeinheit bestehende Druckunterschied zur Erzeugung einer in Richtung des Rauchgaskanal gerichteten Strömung innerhalb der Verbrennungsluft-Teilstromleitung zur Förderung des in den Verbrennungsluft-Teilstrom eingeleiteten und/oder eingedüsten Reduktionsmittels und/oder zur Einleitung und/oder Eindüsung des Verbrennungsluft-Teilstroms in die Verdampfungs- und/oder Zerstäubungseinheit ausreichend. Um den bereits bestehenden Druckunterschied, insbesondere für eine Fremdmediumzerstäubung des Reduktionsmittels, örtlich zu erhöhen, kann eine Fördereinrichtung, insbesondere ein Gebläse, in der Verbrennungsluft-Teilstromleitung angeordnet sein. Vorzugsweise ist die Fördereinrichtung, insbesondere das Gebläse, in Verbrennungsluft-Teilstrom-Strömungsrichtung stromaufwärts der Verdampfungs- und/oder Zerstäubungseinheit angeordnet, sodass der Druck in Verbrennungsluft-Teilstrom-Strömungsrichtung stromabwärts der Fördereinrichtung bzw. stromaufwärts der Verdampfungs- und/oder Zerstäubungseinheit örtlich lokal erhöht wird.

In vorteilhafter Ausgestaltung des Rauchgasentstickungsverfahrens ist zudemvorgesehen, dass ein aus dem Rauchgasentstickungsreaktor austretender, entstickter Reingas-Rauchgasmassenstrom der einen oder den mehreren in Rauchgasströmungsrichtung stromabwärts des Rauchgasentstickungsreaktors angeordneten Luftvorwärmeinheiten zugeführt und dessen Wärmeenergiegehalt zumindest teilweise zum Vorwärmen der dem Kessel oder Dampferzeuger des Kraftwerks zugeführten Verbrennungsluft und/oder zum Vorwärmen des zur Verdampfung und/oder zur Verdünnung des Reduktionsmittels oder des Reduktionsmittelmassenstroms verwendeten Verbrennungsluft-Teilstroms an diese und/oder an diesen übertragen wird.

Gemäß weiterer zweckmäßiger Ausgestaltung der Erfindung ist vorgesehen, dass ein Volumenanteil des zur Verdampfung und/oder zur Verdünnung des dem Rohgas-Rauchgasmassenstrom zuzuführenden Reduktionsmittelmassenstroms verwendeten Verbrennungsluft-Teilstroms in Bezug auf den Gesamtvolumenstrom der dem Kessel oder Dampferzeuger zuzuführenden Verbrennungsluft geregelt und/oder eingestellt wird.

Weiterhin ist vorteilhafterweise vorgesehen, dass der Volumenanteil des zur Verdampfung und/oder zur Verdünnung des dem Rohgas-Rauchgasmassenstrom zuzuführenden Reduktionsmittelmassenstroms des Reduktionsmittels verwendeten Verbrennungsluft-Teilstroms in Bezug auf den Gesamtvolumenstrom der dem Kessel oder Dampferzeuger zuzuführenden Verbrennungsluft, insbesondere während eines Volllastbetriebs des Kraftwerks auf einen konstanten Wert eingestellt wird

In Weiterbildung sieht die Erfindung außerdem vor, dass der Volumenanteil des zur Verdampfung und/oder zur Verdünnung des dem Rohgas-Rauchgasmassenstrom zuzuführenden Reduktionsmittelmassenstroms des Reduktionsmittels verwendeten Verbrennungsluft-Teilstroms in Bezug auf den Gesamtvolumenstrom der der dem Kessel oder Dampferzeuger zuzuführenden Verbrennungsluft, insbesondere während eines Teillastbetriebs und/oder verschiedener Betriebsphasen des Kraftwerks, in Abhängigkeit des jeweils zur Entstickung des Rohgas-Rauchgasmassenstroms benötigten Reduktionsmittelmassenstroms geregelt und/oder eingestellt wird.

Je nach Lastbereich, in welchem das Kraftwerk, insbesondere ein mit fossilem, kohlenstoffhaltigem Brennstoff befeuertes Dampfkraftwerk, gefahren wird, sind unterschiedliche Konzentrationen an Stickoxiden im Rohgas-Rauchgasmassenstrom enthalten, an welche die Menge bzw. der Massenstrom an zugeführtem Reduktionsmittel, d.h. der Reduktionsmittelmassenstrom, vorteilhafterweise anzupassen ist. Zur Verdampfung eines höheren Reduktionsmittelmassenstroms wird ein höherer Eintrag an Wärmeenergie benötigt. Für eine Betriebsphase, insbesondere während eines Volllastbetriebs des Kraftwerks, lässt sich daher der Volumenanteil des vorgewärmten Verbrennungsluft-Teilstroms, welcher aus dem vorgewärmten Verbrennungsluftstrom abgezweigt wird auf einen konkreten Wert einstellen. Auch im Volllastbetrieb, bei welchem die höchste Menge an Stickoxiden entsteht und somit der höchste Reduktionsmittelmassenstrom benötigt wird, ist ein nur geringer Volumenanteil, insbesondere in einem Bereich zwischen 0,5 - 5 Vol.-%, vorzugsweise nur etwa 1 Vol.-%, in Bezug auf den Gesamtvolumenstrom der dem Kessel oder Dampferzeuger zuzuführenden Verbrennungsluft völlig ausreichend, um das dem Rohgas-Rauchgasmassenstrom zuzuführende Reduktionsmittel zu verdampfen und/oder zu verdünnen. Ebenfalls denkbar ist eine Regelung bzw. Nachregelung des Volumenanteils des abgezweigten Verbrennungsluft-Teilstroms permanent online, während des Kraftwerkbetriebs zur Anpassung an den aktuell benötigten Reduktionsmittelmassenstrom.

Zusätzlich zu dem vorgewärmten Verbrennungsluft-Teilstrom kann in einer vorteilhaften Ausführung des Verfahrens eine Verdünnungs- und/oder Trägerluft zur Verdünnung und/oder Förderung des Reduktionsmittelmassenstroms in diesen eingeleitet und/oder eingedüst werden.

Die Rauchgasentstickungsanlage zeichnet sich für die Durchführung eines besonders vorteilhaften Verfahrens in Weiterbildung auch dadurch aus, dass sie eine mit der Reduktionsmittelleitung und der Verbrennungsluft-Teilstromleitung in fluidleitender Verbindung stehende Verdampfungs- und/oder Zerstäubungseinheit aufweist, in welcher das dem Rohgas-Rauchgasmassenstrom zuzuführende Reduktionsmittel oder der dem Rohgas-Rauchgasmassenstrom zuzuführende Reduktionsmittelmassenstrom des Reduktionsmittels mittels des vorgewärmten Verbrennungsluft-Teilstroms verdampfbar und/oder verdünnbar ist.

Hierbei ist es zudem von Vorteil, dass das Reduktionsmittel oder der das Reduktionsmittel enthaltende Reduktionsmittelmassenstrom mittels der Verdampfungs- und/oder Zerstäubungseinheit in den vorgewärmten Verbrennungsluft-Teilstrom einleitbar und/oder eindüsbar ist, wobei eine in dem vorgewärmten Verbrennungsluft-Teilstrom enthaltene Wärmeenergie direkt und unmittelbar an das Reduktionsmittel oder an den Reduktionsmittelmassenstrom des Reduktionsmittels übertragbar und/oder der Reduktionsmittelmassenstrom verdünnbar ist.

Vorteilhaft ist ebenfalls eine Ausführungsform der Rauchgasentstickungsanlage, bei welcher die zur Führung des Verbrennungsluft-Teilstroms vorgesehene Verbrennungsluft-Teilstromleitung und die zur Zuführung des Reduktionsmittels vorgesehene Reduktionsmittelleitung in die Verdampfungs- und/oder Zerstäubungseinheit münden und derart ausgestaltet sind, dass der dem Rohgas-Rauchgasmassenstrom zuzuführende Reduktionsmittelmassenstrom des Reduktionsmittels in die Verdampfungs- und/oder Zerstäubungseinheit eingespritzt und/oder innerhalb dieser zerstäubt wird und/oder das in dem Reduktionsmittelmassenstrom enthaltene Reduktionsmittel durch Inkontaktbringen mit dem der Verdampfungs- und/oder Zerstäubungseinheit zugeführten Verbrennungsluft-Teilstrom innerhalb dieser Verdampfungs- und/oder Zerstäubungseinheit zerstäubt und/oder verdampft und/oder der Reduktionsmittelmassenstrom verdünnt wird.

Nach einer zweckmäßigen Ausführungsform zeichnet sich die Rauchgasentstickungsanlage außerdem dadurch aus, dass die Verbrennungsluft-Teilstromleitung eine Fördereinrichtung, insbesondere ein Gebläse, zur Förderung des Verbrennungsluft-Teilstroms aufweist, die derart ausgebildet ist, dass ein zwischen der Reduktionsmittel-Einspeisung und der einen oder der mehreren in dem zur Zuführung von Verbrennungsluft zu dem Kessel oder Dampferzeuger ausgebildeten Verbrennungsluftkanal angeordneten Luftvorwärmeinheiten oder ein in Luftströmungsrichtung stromabwärts dieser einen oder mehreren Luftvorwärmeinheiten zwischen der Reduktionsmittel-Einspeisung und dem Verbrennungsluftkanal vorliegender Druckunterschied örtlich erhöht und/oder ein bei der Einleitung und/oder Eindüsung des Verbrennungsluft-Teilstroms in die Verdampfungs- und/oder Zerstäubungseinheit auftretender Druckverlust und/oder Druckabfall ausgeglichen wird.

Eine vorteilhafte Weiterbildung der Rauchgasentstickungsanlage sieht vor, dass in der Verbrennungsluft-Teilstromleitung eine Regelungsvorrichtung, insbesondere eine Regelklappe und/oder ein Stellventil, angeordnet ist, mittels welcher der zur Verdampfung und/oder zur Verdünnung des dem Rohgas-Rauchgasmassenstrom zuzuführenden Reduktionsmittelmassenstroms des Reduktionsmittels vom Gesamtvolumenstrom der dem Kessel oder Dampferzuger zuzuführenden Verbrennungsluft abzuzweigende Volumen- oder Volumenstrom-oder Massenstromanteil des Verbrennungsluft-Teilstroms regelbar und/oder einstellbar ist.

Schließlich zeichnet sich eine Ausgestaltung der Rauchgasentstickungsanlage dadurch aus, dass der oder die Luftvorwärmeinheiten als, insbesondere im Gegenstromprinzip arbeitende, regenerative Wärmeübertrager ausgebildet sind und der Rauchgaskanal eine fluidleitende Verbindung zwischen dem Rauchgasentstickungsreaktor und der einen oder den mehreren Luftvorwärmeinheiten ausbildet, sodass ein Wärmeenergiegehalt eines aus dem Rauchgasentstickungsreaktor austretenden, entstickten Reingas-Rauchgasmassenstroms zumindest teilweise zum Vorwärmen der dem Kessel und/oder Dampferzeuger des Kraftwerks zuzuführenden Verbrennungsluft an diese und/oder zum Vorwärmen des zur Verdampfung und/oder zur Verdünnung des Reduktionsmittelmassenstroms an Reduktionsmittel dem Reduktionsmittelmassenstrom zuzuführenden Verbrennungsluft-Teilstroms an diesen übertragbar ist. Insbesondere eignen sich sogenannte Rotatioswärmeübertrager als Luftvorwärmeinheiten.

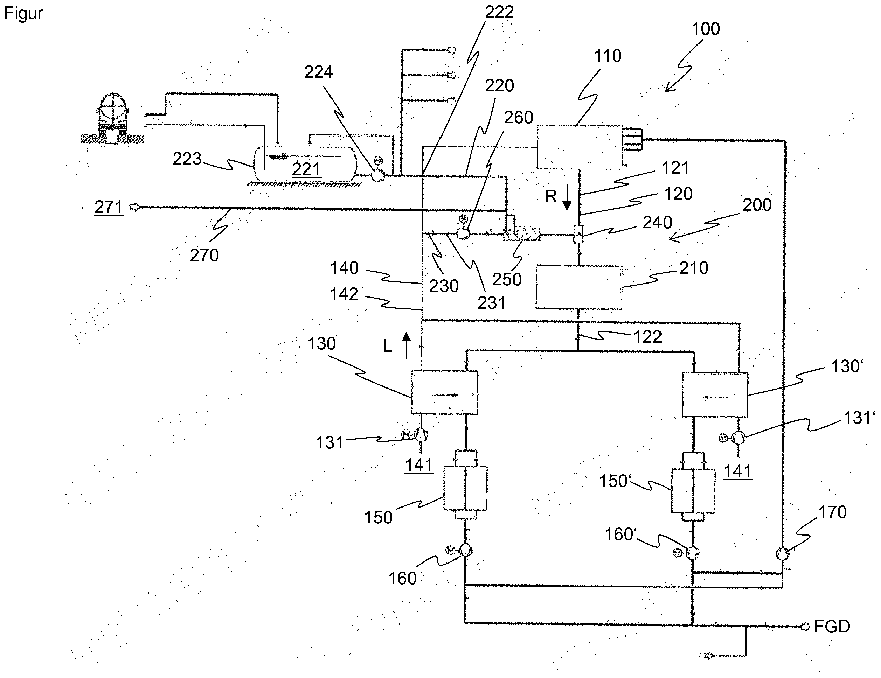

Die Erfindung ist nachstehend anhand der Zeichnung beispielhaft näher erläutert. Diese zeigt in einer einzigen
- Figur: eine beispielhafte Ausführungsform einer erfindungsgemäßen Rauchgasentstickungsanlage in schematischer Darstellung.

Die einzige Figur zeigt in schematischer Übersichtsdarstellung eine beispielhafte Ausführungsform einer erfindungsgemäßen Rauchgasentstickungsanlage 200, die in den Rauchgasstrang eines Kraftwerks 100, insbesondere eines fossil, mit einem kohlenstoffhaltigen Brennstoff, befeuerten Dampfkraftwerks, integriert ist. Bei der Verbrennung des, insbesondere fossilen, kohlenstoffhaltigen Brennstoffs im Kessel oder Dampferzeuger 110 entstehen Abgase, welche als Rauchgas über einen Rauchgaskanal 120 rauchgasausgangsseitig des Kessels oder Dampferzeugers 110 in einem in dem Rauchgaskanal 120 strömenden Rohgas-Rauchgasmassenstrom 121 abgeführt werden. In Rauchgasströmungsrichtung R aufeinanderfolgend sind im Rauchgaskanal 120 eine Rauchgasentstickungsanlage 200, zwei parallele Luftvorwärmeinheiten 130, 130' und zwei parallele Feststoffabscheider 150, 150', insbesondere elektrostatische Abscheider, angeordnet. Die Luftvorwärmeinheiten 130, 130', und die Feststoffabscheider 150, 150' sind jeweils paarweise, in Bezug auf die Durchströmung mit einem Reingas-Rauchgasstrom 122 zueinander parallel angeordnet, wobei sich der Rauchgaskanal 120 hierzu in zwei ebenfalls parallel verlaufende Rauchgaskanalabschnitte mit jeweils zugeordnetem, den Feststoffabscheidern 150, 150' nachgeschaltetem Gebläse 160, 160' aufteilt. Diese, im Ausführungsbeispiel dargestellte, Parallelschaltung ist rein optional und beispielhaft. Im Rahmen der Erfindung sind andere, aus dem Stand der Technik bekannte, Schaltungen mit einer oder mehr als zwei Luftvorwärmeinheiten 130, 130' und einem oder mehr als zwei Feststoffabscheidern 150, 150' in paralleler oder aufeinanderfolgender Anordnung denkbar. Nach Durchlaufen der Feststoffabscheider 150, 150' wird ein Teil des Rauchgases mittels des Rezirkulationsgebläses 170 zu dem Kessel oder Dampferzeuger 110 rückgeführt. Bevor der übrige Rauchgasanteil in die Atmosphäre entlassen wird, wird dieser weiteren Reinigungsschritten, insbesondere eine Rauchgasentschwefelung (FGD) unterzogen.

Die Luftvorwärmeinheiten 130, 130' sind insbesondere als regenerative Wärmeübertrager, vorzugsweise als rotierende Wärmeübertrager, sogenannte Luftvorwärmer, ausgebildet und übertragen im Gegenstromprinzip im Rauchgas enthaltene Wärmeenergie an eine dem Kessel oder Dampferzeuger 110 zuzuführende Verbrennungsluft 141. Die Verbrennungsluft 141 wird über die jeweiligen Gebläse 131, 131' aus der Umgebung, vorzugsweise aus dem Kesselraum selbst, angesaugt und mittels der Luftvorwärmeinheiten 130, 130' vorgewärmt bzw. erhitzt. Ein derart erhitzter bzw. vorgewärmter Verbrennungsluftstrom 142 wird in einem Verbrennungsluftkanal 140 entlang einer Luftströmungsrichtung L dem Kessel oder Dampferzeuger 110 zur Verbrennung des insbesondere fossilen, kohlenstoffhaltigen Brennstoffs zugeführt.

Die integrierte oder integral ausgebildete Rauchgasentstickungsanlage 200 umfasst einen zur Entstickung des Rauchgases, d.h. zur Entfernung von Stickoxiden aus dem Rauchgas, ausgebildeten Rauchgsasentstickungsreaktor 210. Der Rauchgasentstickungsreaktor 210 ist in Rauchgasströmungsrichtung R nach, d. h. stromabwärts des Kessels oder Dampferzeugers 110 und vor, d. h. stromaufwärts der Luftvorwärmeinheiten 130, 130' angeordnet und umfasst eine oder mehrere Katalysatorlagen zur selektiven katalytischen Reduktion (SCR) der im Rauchgas enthaltenen Stickoxide. Das zur katalytischen Reduktion notwendige Reduktionsmittel 221, insbesondere ein Harnstoff oder Ammoniak enthaltendes oder aus diesem bestehendes Reduktionsmittel, wird mittels einer, in Rauchgsasströmungsrichtung R vor, d. h. stromaufwärts des Rauchgasentstickungsreaktors 210, und nach, d. h. stromabwärts des Kessels oder Dampferzeugers 110, angeordneten Reduktionsmitteleinspeisung 240, vorzugsweise vollständig, dampf- und/oder gasförmig in den in dem Rauchgaskanal 120 strömenden, Stickoxide enthaltenden, Rohgas-Rauchgasmassenstrom 121 eingeleitet und/oder eingedüst. Aufgrund des, vorzugweise vollständigen, gasförmigen Aggregatzustandes des Reduktionsmittels 221 lässt sich eine gute Vermischung mit bzw. eine gute Verteilung innerhalb des Rohgas-Rauchgasmassenstroms 121 erzielen, wodurch wiederum eine effektivere Entfernung der Stickoxide aus dem Rohgas-Rauchgasmassenstrom 121 an der einen oder den mehreren Katalysatorlagen des Rauchgasentstickungsreaktors 210 ermöglicht wird. Nach der Entstickung verlässt das Rauchgas den Rauchgsasentstickungsreaktor 210 als Reingas-Rauchgasmassenstrom 122. Dieser wird den im Verbrennungsluftkanal 140 angeordneten Luftvorwärmern 130, 130' zur Übertragung der darin enthaltenen Wärmeenergie an die zur Zuführung zu dem Kessel oder Dampferzeuger 110 vorgesehen Verbrennungsluft 141 zugeführt.

Das Reduktionsmittel 221 wird als Bestandteil eines vorgewärmten Verbrennungsluft-Teilstroms 231, welcher insbesondere aus dem in dem Verbrennungsluftkanal 140 strömenden, mittels der Luftvorwärmeinheiten 130, 130' vorgewärmten Verbrennungsluftstrom 142 abgezweigt wird. Hierzu stellt eine Verbrennungsluft-Teilstromleitung 230 eine fluidleitende Verbindung zwischen dem Verbrennungsluftkanal 140 und dem den Rohgas-Rauchgasstrom 121 führenden Rauchgaskanal 120 sowie der zur Einleitung und/oder Eindüsung des Reduktionsmittels 221 vorgesehenen Reduktionsmittel-Einspeisung 240 her. Die Verbrennungsluft-Teilstromleitung 230 zweigt lediglich einen geringen Volumenanteil des aus dem in dem Verbrennungsluftkanal 140 strömenden, vorgewärmten Verbrennungsluftstroms 142 ab. Bei einem geringen Volumenanteil handelt es sich insbesondere um einen im einstelligen Bereich liegenden Vol-%-Anteil, vorzugsweise um etwa 1 Vol-% des Gesamtvolumens der dem Kessel oder dem Dampferzeuger 110 zuzuführender Verbrennungsluft 141. Das Reduktionsmittel 221 wird aus einem Reduktionsmittel-Reservoir 223, insbesondere aus einem Tank, entnommen und mittels einer Reduktionsmittelpumpe 224 als Reduktionsmittelmassenstrom 222 über eine Reduktionsmittelleitung 220 in eine Verdampfungs- und/oder Zerstäubungseinheit 250 eingeleitet und/oder eingedüst. Die Verdampfungs- und/oder Zerstäubungseinheit 250 ist in der Verbrennungsluft-Teilstromleitung 230 angeordnet, sodass der in der Verbrennungsluft-Teilstromleitung 230 strömende Verbrennungsluft-Teilstrom 231 ebenfalls in die Verdampfungs- und/oder Zerstäubungseinheit 250 einleitbar und/oder eindüsbar ist. Die Verdampfungs- und/oder Zerstäubungseinheit 250 ist zur Verdampfung des Reduktionsmittels 221 vorgesehen. Hierzu wird der das Reduktionsmittel 221 enthaltende Reduktionsmittelmassenstrom 222 zerstäubt, bspw. mittels Druckzerstäubung und/oder Fremdmediumzerstäubung, und durch die im Verbrennungsluft-Teilstrom 231 enthaltene Wärmeenergie, welche innerhalb der Verdampfungs- und/oder Zerstäubungseinheit 250 direkt und unmittelbar an das Reduktionsmittel 221 übertragbar ist bzw. übertragen wird, vorzugsweise vollständig, verdampft. Gleichzeitig wird der Reduktionsmittelmassenstrom 222 mit dem zugeführten Verbrennungsluft-Teilstrom 231 verdünnt. Das Reduktionsmittel 221 wird nach dessen, vorzugsweise vollständiger, Verdampfung als Bestandteil des Verbrennungsluft-Teilstroms 231 mittels der Verbrennungsluft-Teilstromleitung 230 der Reduktionsmittel-Einspeisung 240 zugeführt und in den Rohgas-Rauchgasmassenstrom 121 eingeleitet und/oder eingedüst.

Insbesondere, um den Verbrennungsluft-Teilstrom zur Fremdmediumzerstäubung, zusätzlich oder optional zu einer Druckzerstäubung, des Reduktionsmittels 221 innerhalb der Verdampfungs- und/oder Zerstäubungseinheit 250 zu nutzen, ist eine Fördereinrichtung 260, insbesondere ein Gebläse, in der Verbrennungsluft-Teilstromleitung 230 in Verbrennungsluft-Teilstrom-Strömungsrichtung vor, d. h. stromaufwärts der Verdampfungs- und/oder Zerstäubungseinheit 250 angeordnet. Hierdurch lässt sich der Druck innerhalb der Verbrennungsluft-Teilstromleitung 230 örtlich lokal, in Verbrennungsluft-Teilstrom-Strömungsrichtung stromabwärts der Fördereinrichtung 260 und stromaufwärts der Verdampfungs- und/oder Zerstäubungseinheit 250, erhöhen, wodurch der Verbrennungsluft-Teilstrom 231 mit höherem Druck bzw. höherer Geschwindigkeit in die Verdampfungs- und/oder Zerstäubungseinheit 250 einleitbar und/oder eindüsbar ist und ein Druckverlust und/oder Druckabfall ausgleichbar ist. Über eine Verdünnungs- und/oder Trägerluftleitung 270 kann optional zusätzliche Verdünnungs- und/oder Trägerluft 271 zur Förderung und/oder Verdünnung des in der Reduktionsmittelleitung 220 strömenden Reduktionsmittelmassenstroms 222 des Reduktionsmittels 221 in die Reduktionsmittelleitung 220 eingeleitet werden.

Die in der Figur dargestellte beispielhafte Ausführungsform einer erfindungsgemäßen Rauchgasentstickungsanlage 200 kann zur Nachrüstung von Rauchgas erzeugende Kraftwerken 100, insbesondere fossil befeuerten Dampfkraftwerken, in diese integriert werden, um das erfindungsgemäße Rauchgasentstickungsverfahren durchzuführen. Mittels dieses Verfahrens lässt sich, durch Nutzung des ohnehin zur Verfügung stehenden vorgewärmten Verbrennungsluftstroms 142, der Verbrauch an Betriebsmitteln reduzieren, insbesondere sind zusätzliche Betriebsmittel wie Hilfsdampf oder elektrische Energie oder zusätzliche Anlagenkomponenten, wie Wärmeübertrager, nicht länger zur Verdampfung des Reduktionsmittels 221 notwendig.

### Bezugszeichenliste:

- 100: Kraftwerk
- 110: Kessel oder Dampferzeuger
- 120: Rauchgaskanal
- 121: Rohgas-Rauchgasmassenstrom
- 122: Reingas-Rauchgasmassenstrom
- 130, 130': Luftvorwärmeinheit
- 131, 131': Gebläse
- 140: Verbrennungsluftkanal
- 141: Verbrennungsluft
- 142: Verbrennungsluftstrom
- 150, 150': Feststoffabscheider
- 160, 160': Gebläse
- 170: Rezirkulationsgebläse
- 200: Rauchgasentstickungsanlage
- 210: Rauchgasentstickungsreaktor
- 220: Reduktionsmittelleitung
- 221: Reduktionsmittel
- 222: Reduktionsmittelmassenstrom
- 223: Reduktionsmittel-Reservoir
- 224: Reduktionsmittelpumpe
- 230: Verbrennungsluft-Teilstromleitung
- 231: Verbrennungsluft-Teilstrom
- 240: Reduktionsmittel-Einspeisung
- 250: Verdampfungs- und/oder Zerstäubungseinheit
- 260: Fördereinrichtung
- 270: Verdünnungs- und/oder Trägerluftleitung
- 271: Verdünnungs- und/oder Trägerluft
- L: Luftströmungsrichtung
- R: Rauchgasströmungsrichtung

## Patentansprüche

1. Rauchgasentstickungsverfahren, bei welchem ein in einem Rauchgaskanal (120) strömender Rohgas-Rauchgasmassenstrom (121) eines mit einem kohlenstoffhaltigen Brennstoff befeuerten Kessels oder Dampferzeugers (110) eines Kraftwerks (100) rauchgasausgangsseitig des Kessels oder Dampferzeugers (110) in einem, insbesondere selektiv katalytisch arbeitenden, Rauchgasentstickungsreaktor (210) entstickt wird, wobei rauchgasausgangsseitig des Kessels oder Dampferzeugers (110) und in Rauchgasströmungsrichtung (R) stromaufwärts des Rauchgasentstickungsreaktors (210) mittels einer Reduktionsmittel- Einspeisung (240) Reduktionsmittel (221), insbesondere ein Ammoniak oder Harnstoff aufweisendes Reduktionsmittel (221), in den in dem Rauchgaskanal (120) strömenden Rohgas-Rauchgasmassenstrom (121) eingeleitet und/oder eingedüst wird,
**dadurch gekennzeichnet,**
**dass** das Reduktionsmittel (221) als Bestandteil eines vorgewärmten Verbrennungsluft-Teilstroms (231) in den in dem Rauchgaskanal (120) strömenden Rohgas-Rauchgasmassenstrom (121) eingeleitet und/oder eingedüst wird, wobei der Verbrennungsluft-Teilstrom (231) aus einer oder mehreren Luftvorwärmeinheiten (130, 130'), die in einem dem Kessel oder Dampferzeuger (110) Verbrennungsluft (141) zuführenden Verbrennungsluftkanal (140) angeordnet sind, oder in Luftströmungsrichtung (L) stromabwärts dieser einen oder mehreren Luftvorwärmeinheiten (130, 130') aus einem vorgewärmten Verbrennungsluftstrom (142) abgezweigt wird.

2. Rauchgasentstickungsverfahren nach Anspruch 1, **dadurch gekennzeichnet, dass** mittels des vorgewärmten Verbrennungsluft-Teilstroms (231) das dem Rohgas-Rauchgasmassenstrom (121) zuzuführende Reduktionsmittel (221) oder ein dem Rohgas-Rauchgasmassenstrom (121) zuzuführender Reduktionsmittelmassenstrom (222) an Reduktionsmittel (221) verdampft und/oder verdünnt wird.

3. Rauchgasentstickungsverfahren nach Anspruch 1 oder 2, **dadurch gekennzeichnet, dass** das Reduktionsmittel (221) oder der das Reduktionsmittel (221) enthaltende Reduktionsmittelmassenstrom (222) in den vorgewärmten Verbrennungsluft-Teilstrom (231) eingeleitet und/oder eingedüst wird, wobei eine in dem vorgewärmten Verbrennungsluft-Teilstrom (231) enthaltene Wärmeenergie direkt und unmittelbar an das Reduktionsmittel (221) oder an den Reduktionsmittelmassenstrom (222) des Reduktionsmittels (221) übertragen wird und/oder das Reduktionsmittel (221) oder der Reduktionsmittelmassenstrom (222) verdünnt wird.

4. Rauchgasentstickungsverfahren, nach einem der vorhergehenden Ansprüche, **dadurch gekennzeichnet, dass** das Reduktionsmittel (221) oder der Reduktionsmittelmassenstrom (222) des Reduktionsmittels (221) vor der Einleitung und/oder Eindüsung in den Rohgas-Rauchgasmassenstrom (121) mittels des vorgewärmten Verbrennungsluft-Teilstroms (231) ganz oder teilweise verdampft und anschließend gas- und/oder dampfförmig über die Reduktionsmittel-Einspeisung (240) in den in dem Rauchgaskanal (120) strömenden Rohgas-Rauchgasmassenstrom (121) eingeleitet und/oder eingedüst wird.

5. Rauchgasentstickungsverfahren nach einem der vorhergehenden Ansprüche, **dadurch gekennzeichnet, dass** das dem Rohgas-Rauchgasmassenstrom (121) zuzuführende Reduktionsmittel (221) oder der dem Rohgas-Rauchgasmassenstrom (121) zuzuführende Reduktionsmittelmassenstrom (222) des Reduktionsmittels (221) einer in Verbrennungsluft-Teilstrom-Strömungsrichtung stromaufwärts der Reduktionsmittel-Einspeisung (240) angeordneten Verdampfungs- und/oder Zerstäubungseinheit (250) zugeführt und in diese eingespritzt und/oder innerhalb dieser zerstäubt wird.

6. Rauchgasentstickungsverfahren nach Anspruch 5, **dadurch gekennzeichnet, dass** der vorgewärmte Verbrennungsluft-Teilstrom (231) in die Verdampfungs- und/oder Zerstäubungseinheit (250) eingeleitet und/oder eingedüst wird und durch Inkontaktbringen mit dem der Verdampfungs- und/oder Zerstäubungseinheit (250) zugeführten Reduktionsmittelmassenstrom (222) das darin enthaltene Reduktionsmittel (221) zerstäubt und/oder verdampft und/oder der Reduktionsmittelmassenstrom (222) verdünnt wird.

7. Rauchgasentstickungsverfahren nach einem der vorhergehenden Ansprüche, **dadurch gekennzeichnet, dass** ein zwischen dem den Rohgas-Rauchgasmassenstrom (121) führenden Rauchgaskanal (120) und dem dem Kessel oder Dampferzeuger (110) Verbrennungsluft zuführenden Verbrennungsluftkanal (140) oder der einen oder den mehreren in dem Verbrennungsluftkanal (140) angeordneten Luftvorwärmeinheiten (130, 130') bestehender Druckunterschied mittels einer den vorgewärmten Verbrennungsluft-Teilstrom (231) fördernden Fördereinrichtung (260), insbesondere mittels eines Gebläses, örtlich erhöht und/oder ein bei der Einleitung und/oder Eindüsung des Verbrennungsluft-Teilstroms (231) in die Verdampfungs- und/oder Zerstäubungseinheit (250) auftretender Druckverlust und/oder Druckabfall ausgeglichen wird.

8. Rauchgasentstickungsverfahren nach einem der vorhergehenden Ansprüche, **dadurch gekennzeichnet, dass** ein aus dem Rauchgasentstickungsreaktor (210) austretender, entstickter Reingas-Rauchgasmassenstrom (122) der einen oder den mehreren in Rauchgasströmungsrichtung (R) stromabwärts des Rauchgasentstickungsreaktors (210) angeordneten Luftvorwärmeinheiten (130, 130') zugeführt und dessen Wärmeenergiegehalt zumindest teilweise zum Vorwärmen der dem Kessel oder Dampferzeuger (110) des Kraftwerks (100) zugeführten Verbrennungsluft (141) und/oder zum Vorwärmen des zur Verdampfung und/oder zur Verdünnung des Reduktionsmittels (221) oder des Reduktionsmittelmassenstroms (222) verwendeten Verbrennungsluft-Teilstroms (231) an diese und/oder an diesen übertragen wird.

9. Rauchgasentstickungsverfahren nach einem der vorhergehenden Ansprüche, **dadurch gekennzeichnet, dass** ein Volumenanteil des zur Verdampfung und/oder zur Verdünnung des dem Rohgas-Rauchgasmassenstrom (121) zuzuführenden Reduktionsmittelmassenstroms (222) des Reduktionsmittels (221) verwendeten Verbrennungsluft-Teilstroms (231) in Bezug auf den Gesamtvolumenstrom der dem Kessel oder Dampferzeuger (110) zuzuführenden Verbrennungsluft (141) geregelt und/oder eingestellt wird.

10. Rauchgasentstickungsverfahren nach Anspruch 8, **dadurch gekennzeichnet, dass** der Volumenanteil des zur Verdampfung und/oder zur Verdünnung des dem Rohgas-Rauchgasmassenstrom (121) zuzuführenden Reduktionsmittelmassenstroms (222) des Reduktionsmittels (221) verwendeten Verbrennungsluft-Teilstroms (231) in Bezug auf den Gesamtvolumenstrom der dem Kessel oder Dampferzeuger (110) zuzuführenden Verbrennungsluft (141), insbesondere während eines Volllastbetriebs des Kraftwerks, auf einen konstanten Wert eingestellt wird.

11. Rauchgasentstickungsverfahren nach Anspruch 8 oder 9, **dadurch gekennzeichnet, dass** der Volumenanteil des zur Verdampfung und/oder zur Verdünnung des dem Rohgas-Rauchgasmassenstrom (121) zuzuführenden Reduktionsmittelmassenstroms (222) des Reduktionsmittels (221) verwendeten Verbrennungsluft-Teilstroms (231) in Bezug auf den Gesamtvolumenstrom der dem Kessel oder Dampferzeuger (110) zuzuführenden Verbrennungsluft (141), insbesondere während eines Teillastbetriebs und/oder verschiedener Betriebsphasen des Kraftwerks (100), in Abhängigkeit des jeweils zur Entstickung des Rohgas-Rauchgasmassenstroms (121) benötigten Reduktionsmittelmassenstroms (222) geregelt und/oder eingestellt wird.

12. Rauchgasentstickungsverfahren nach einem der vorhergehenden Ansprüche, **dadurch gekennzeichnet, dass** zusätzlich zu dem vorgewärmten Verbrennungsluft-Teilstrom (231) Verdünnungs- und/oder Trägerluft (271) zur Verdünnung und/oder Förderung des Reduktionsmittelmassenstroms (222) des Reduktionsmittels in diesen eingeleitet und/oder eingedüst wird.

13. Rauchgasentstickungsanlage (200), die, insbesondere zur Durchführung des Verfahrens nach einem der Ansprüche 1 - 12, in ein Rauchgas erzeugendes Kraftwerk (100) integriert ist, umfassend einen, insbesondere selektiv katalytisch arbeitenden Rauchgasentstickungsreaktor (210), der rauchgasausgangsseitig zu einem mit einem kohlenstoffhaltigen Brennstoff befeuerbaren oder befeuerten Kessel oder Dampferzeuger (110) des Kraftwerks (100) angeordnet ist, eine zur Zuführung eines Reduktionsmittels (221), insbesondere eines Ammoniak oder Harnstoff enthaltenden Reduktionsmittels (221), vorgesehene Reduktionsmittelleitung (220) und eine, in Rauchgasströmungsrichtung (R) stromaufwärts des Rauchgasentstickungsreaktors (210) angeordnete Reduktionsmittel-Einspeisung (240) zur Einleitung und/oder Eindüsung des Reduktionsmittels (221) in einen zur fluidleitenden Verbindung zwischen dem Kessel oder Dampferzeuger (110) und dem Rauchgasentstickungsreaktor (210) ausgebildeten Rauchgaskanal (120), **dadurch gekennzeichnet,**
**dass** zwischen der Reduktionsmittel-Einspeisung (240) und einer oder mehreren in einem zur Zuführung von Verbrennungsluft (141) zu dem Kessel oder Dampferzeuger (110) ausgebildeten Verbrennungsluftkanal (140) angeordneten Luftvorwärmeinheiten (130, 130') oder zwischen der Reduktionsmittel-Einspeisung (240) und dem Verbrennungsluftkanal (140), in Luftströmungsrichtung (L) stromabwärts dieser einen oder mehreren Luftvorwärmeinheiten (130, 130'), eine fluidleitende Verbrennungsluft-Teilstromleitung (230) ausgebildet ist, die zur Zuführung des Reduktionsmittels (221) als Bestandteil eines vorgewärmten Verbrennungsluft-Teilstroms (231) mit der Reduktionsmittelleitung (220) in fluidleitender Verbindung steht.

14. Rauchgasentstickungsanlage (200) nach Anspruch 13, **dadurch gekennzeichnet, dass** sie eine mit der Reduktionsmittelleitung (220) und der Verbrennungsluft-Teilstromleitung (230) in fluidleitender Verbindung stehende Verdampfungs- und/oder Zerstäubungseinheit (250) aufweist, in welcher das dem Rohgas-Rauchgasmassenstrom (121) zuzuführende Reduktionsmittel (221) oder der dem Rohgas-Rauchgasmassenstrom (121) zuzuführende Reduktionsmittelmassenstrom (222) des Reduktionsmittels (221) mittels des vorgewärmten Verbrennungsluft-Teilstroms (231) verdampfbar und/oder verdünnbar ist.

15. Rauchgasentstickungsanlage (200) nach Anspruch 14, **dadurch gekennzeichnet, dass** das Reduktionsmittel (221) oder der das Reduktionsmittel (221) enthaltende Reduktionsmittelmassenstrom (222) mittels der Verdampfungs- und/oder Zerstäubungseinheit (250) in den vorgewärmten Verbrennungsluft-Teilstrom (231) einleitbar und/oder eindüsbar ist, wobei eine in dem vorgewärmten Verbrennungsluft-Teilstrom (231) enthaltene Wärmeenergie direkt und unmittelbar an das Reduktionsmittel (221) oder den Reduktionsmittelmassenstrom (222) des Reduktionsmittels (221) übertragbar und/oder der Reduktionsmittelmassenstrom (222) verdünnbar ist.

16. Rauchgasentstickungsanlage (200) nach Anspruch 14 oder 15, **dadurch gekennzeichnet, dass** die zur Führung des Verbrennungsluft-Teilstroms (231) vorgesehene Verbrennungsluft-Teilstromleitung (230) und die zur Zuführung des Reduktionsmittelmassenstroms (222) des Reduktionsmittels (221) vorgesehene Reduktionsmittelleitung (220) in die Verdampfungs- und/oder Zerstäubungseinheit (250) münden und derart ausgestaltet sind, das der dem Rohgas-Rauchgasmassenstrom (121) zuzuführende Reduktionsmittelmassenstrom (222) des Reduktionsmittels (221) in die Verdampfungs- und/oder Zerstäubungseinheit (250) eingespritzt und/oder innerhalb dieser zerstäubt wird und/oder das in dem Reduktionsmittelmassenstrom (222) enthaltene Reduktionsmittel (221) durch Inkontaktbringen mit dem der Verdampfungs- und/oder Zerstäubungseinheit (250) zugeführten Verbrennungsluft-Teilstrom (231) innerhalb der Verdampfungs- und/oder Zerstäubungseinheit (250) zerstäubt und/oder verdampft und/oder der Reduktionsmittelmassenstrom (222) verdünnt wird.

17. Rauchgasentstickungsanlage (200) nach einem der Ansprüche 13 - 16, **dadurch gekennzeichnet, dass** die Verbrennungsluft-Teilstromleitung (230) eine Fördereinrichtung (260), insbesondere ein Gebläse, zur Förderung des Verbrennungsluft-Teilstroms (231) aufweist, die derart ausgebildet ist, dass ein zwischen der Reduktionsmittel-Einspeisung (240) und der einen oder den mehreren in dem zur Zuführung von Verbrennungsluft (141) zu dem Kessel oder Dampferzeuger (110) ausgebildeten Verbrennungsluftkanal (140) angeordneten Luftvorwärmeinheiten (130, 130') oder ein in Luftströmungsrichtung (L) stromabwärts dieser einen oder mehreren Luftvorwärmeinheiten (130, 130') zwischen der Reduktionsmittel-Einspeisung (240) und dem Verbrennungsluftkanal (140)vorliegender Druckunterschied örtlich erhöht und/oder ein bei der Einleitung und/oder Eindüsung des Verbrennungsluft-Teilstroms (231) in die Verdampfungs- und/oder Zerstäubungseinheit auftretender Druckverlust und/oder Druckabfall ausgeglichen wird.

18. Rauchgasentstickungsanlage (200) nach einem der Ansprüche 13 - 17, **dadurch gekennzeichnet, dass** in der Verbrennungsluft-Teilstromleitung (231) eine Regelungsvorrichtung, insbesondere eine Regelklappe und/oder ein Stellventil, angeordnet ist, mittels welcher der zur Verdampfung und/oder zur Verdünnung des dem Rohgas-Rauchgasmassenstrom (121) zuzuführenden Reduktionsmittelmassenstroms (222) des Reduktionsmittels (221) vom Gesamtvolumenstrom der dem Kessel oder Dampferzeuger (110) zuzuführenden Verbrennungsluft (141) abzuzweigende Volumen- oder Volumenstrom- oder Massenstromanteil des Verbrennungsluft-Teilstroms (231) regelbar und/oder einstellbar ist.

19. Rauchgasentstickungsanlage nach einem der Ansprüche 13 - 18, **dadurch gekennzeichnet, dass** der oder die Luftvorwärmeinheiten (130, 130') als, insbesondere im Gegenstromprinzip arbeitende, regenerative Wärmeübertrager ausgebildet sind und der Rauchgaskanal (120) eine fluidleitende Verbindung zwischen dem Rauchgasentstickungsreaktor (210) und der einen oder den mehreren Luftvorwärmeinheiten (130, 130') ausbildet, sodass ein Wärmeenergiegehalt eines aus dem Rauchgasentstickungsreaktor (210) austretenden, entstickten Reingas-Rauchgasmassenstroms (122) zumindest teilweise zum Vorwärmen der dem Kessel und/oder Dampferzeuger (110) des Kraftwerks (100) zuzuführenden Verbrennungsluft (141) an diese und/oder zum Vorwärmen des zur Verdampfung und/oder zur Verdünnung des Reduktionsmittelmassenstroms (222) an Reduktionsmittel (221) dem Reduktionsmittelmassenstrom (222) zuzuführenden Verbrennungsluft-Teilstroms (231) an diesen übertragbar ist.

## Geänderte Patentansprüche

### Geänderte Patentansprüche gemäss Regel 137(2) EPÜ.

1. Rauchgasentstickungsverfahren, bei welchem ein in einem Rauchgaskanal (120) strömender Rohgas-Rauchgasmassenstrom (121) eines mit einem kohlenstoffhaltigen Brennstoff befeuerten Kessels oder Dampferzeugers (110) eines Kraftwerks (100) rauchgasausgangsseitig des Kessels oder Dampferzeugers (110) in einem, insbesondere selektiv katalytisch arbeitenden, Rauchgasentstickungsreaktor (210) entstickt wird, wobei rauchgasausgangsseitig des Kessels oder Dampferzeugers (110) und in Rauchgasströmungsrichtung (R) stromaufwärts des Rauchgasentstickungsreaktors (210) mittels einer Reduktionsmittel-Einspeisung (240) Reduktionsmittel (221), insbesondere ein Ammoniak oder Harnstoff aufweisendes Reduktionsmittel (221), in den in dem Rauchgaskanal (120) strömenden Rohgas-Rauchgasmassenstrom (121) eingeleitet und/oder eingedüst wird,
**dadurch gekennzeichnet,**
**dass** das Reduktionsmittel (221) als Bestandteil eines vorgewärmten Verbrennungsluft-Teilstroms (231) in den in dem Rauchgaskanal (120) strömenden Rohgas-Rauchgasmassenstrom (121) eingeleitet und/oder eingedüst wird, wobei der Verbrennungsluft-Teilstrom (231) aus einer oder mehreren Luftvorwärmeinheiten (130, 130'), die in einem dem Kessel oder Dampferzeuger (110) Verbrennungsluft (141) zuführenden Verbrennungsluftkanal (140) angeordnet sind, oder in Luftströmungsrichtung (L) stromabwärts dieser einen oder mehreren Luftvorwärmeinheiten (130, 130') aus einem vorgewärmten Verbrennungsluftstrom (142) abgezweigt wird, und wobei der Verbrennungsluft-Teilstrom einen geringen, insbesondere in einem Bereich zwischen 0,5 bis 5 Vol.-% liegenden Volumenanteil in Bezug auf den Gesamtvolumenstrom der dem Kessel oder Dampferzeuger (110) zuzuführenden Verbrennungsluft (141) darstellt¹ und der Volumenanteil des zur Verdampfung und/oder zur Verdünnung des dem Rohgas-Rauchgasmassenstrom (121) zuzuführenden Reduktionsmittelmassenstroms (222) des Reduktionsmittels (221) verwendeten Verbrennungsluft-Teilstroms (231) in Bezug auf den Gesamtvolumenstrom der dem Kessel oder Dampferzeuger (110) zuzuführenden Verbrennungsluft (141) geregelt und/oder eingestellt wird².
¹ urspr. Beschreibung, S. 5, Z. 1-5; S. 10, Z. 24-34; S. 15, Z. 27-30
² urspr. Anspruch 9

2. Rauchgasentstickungsverfahren nach Anspruch 1, **dadurch gekennzeichnet, dass** mittels des vorgewärmten Verbrennungsluft-Teilstroms (231) das dem Rohgas-Rauchgasmassenstrom (121) zuzuführende Reduktionsmittel (221) oder ein dem Rohgas-Rauchgasmassenstrom (121) zuzuführender Reduktionsmittelmassenstrom (222) an Reduktionsmittel (221) verdampft und/oder verdünnt wird.

3. Rauchgasentstickungsverfahren nach Anspruch 1 oder 2, **dadurch gekennzeichnet, dass** das Reduktionsmittel (221) oder der das Reduktionsmittel (221) enthaltende Reduktionsmittelmassenstrom (222) in den vorgewärmten Verbrennungsluft-Teilstrom (231) eingeleitet und/oder eingedüst wird, wobei eine in dem vorgewärmten Verbrennungsluft-Teilstrom (231) enthaltene Wärmeenergie direkt und unmittelbar an das Reduktionsmittel (221) oder an den Reduktionsmittelmassenstrom (222) des Reduktionsmittels (221) übertragen wird und/oder das Reduktionsmittel (221) oder der Reduktionsmittelmassenstrom (222) verdünnt wird.

4. Rauchgasentstickungsverfahren, nach einem der vorhergehenden Ansprüche, **dadurch gekennzeichnet, dass** das Reduktionsmittel (221) oder der Reduktionsmittelmassenstrom (222) des Reduktionsmittels (221) vor der Einleitung und/oder Eindüsung in den Rohgas-Rauchgasmassenstrom (121) mittels des vorgewärmten Verbrennungsluft-Teilstroms (231) ganz oder teilweise verdampft und anschließend gas- und/oder dampfförmig über die Reduktionsmittel-Einspeisung (240) in den in dem Rauchgaskanal (120) strömenden Rohgas-Rauchgasmassenstrom (121) eingeleitet und/oder eingedüst wird.

5. Rauchgasentstickungsverfahren nach einem der vorhergehenden Ansprüche, **dadurch gekennzeichnet, dass** das dem Rohgas-Rauchgasmassenstrom (121) zuzuführende Reduktionsmittel (221) oder der dem Rohgas-Rauchgasmassenstrom (121) zuzuführende Reduktionsmittelmassenstrom (222) des Reduktionsmittels (221) einer in Verbrennungsluft-Teilstrom-Strömungsrichtung stromaufwärts der Reduktionsmittel-Einspeisung (240) angeordneten Verdampfungs- und/oder Zerstäubungseinheit (250) zugeführt und in diese eingespritzt und/oder innerhalb dieser zerstäubt wird.

6. Rauchgasentstickungsverfahren nach Anspruch 5, **dadurch gekennzeichnet, dass** der vorgewärmte Verbrennungsluft-Teilstrom (231) in die Verdampfungs- und/oder Zerstäubungseinheit (250) eingeleitet und/oder eingedüst wird und durch Inkontaktbringen mit dem der Verdampfungs- und/oder Zerstäubungseinheit (250) zugeführten Reduktionsmittelmassenstrom (222) das darin enthaltene Reduktionsmittel (221) zerstäubt und/oder verdampft und/oder der Reduktionsmittelmassenstrom (222) verdünnt wird.

7. Rauchgasentstickungsverfahren nach einem der vorhergehenden Ansprüche, **dadurch gekennzeichnet, dass** ein zwischen dem den Rohgas-Rauchgasmassenstrom (121) führenden Rauchgaskanal (120) und dem dem Kessel oder Dampferzeuger (110) Verbrennungsluft zuführenden Verbrennungsluftkanal (140) oder der einen oder den mehreren in dem Verbrennungsluftkanal (140) angeordneten Luftvorwärmeinheiten (130, 130') bestehender Druckunterschied mittels einer den vorgewärmten Verbrennungsluft-Teilstrom (231) fördernden Fördereinrichtung (260), insbesondere mittels eines Gebläses, örtlich erhöht und/oder ein bei der Einleitung und/oder Eindüsung des Verbrennungsluft-Teilstroms (231) in die Verdampfungs- und/oder Zerstäubungseinheit (250) auftretender Druckverlust und/oder Druckabfall ausgeglichen wird.

8. Rauchgasentstickungsverfahren nach einem der vorhergehenden Ansprüche, **dadurch gekennzeichnet, dass** ein aus dem Rauchgasentstickungsreaktor (210) austretender, entstickter Reingas-Rauchgasmassenstrom (122) der einen oder den mehreren in Rauchgasströmungsrichtung (R) stromabwärts des Rauchgasentstickungsreaktors (210) angeordneten Luftvorwärmeinheiten (130, 130') zugeführt und dessen Wärmeenergiegehalt zumindest teilweise zum Vorwärmen der dem Kessel oder Dampferzeuger (110) des Kraftwerks (100) zugeführten Verbrennungsluft (141) und/oder zum Vorwärmen des zur Verdampfung und/oder zur Verdünnung des Reduktionsmittels (221) oder des Reduktionsmittelmassenstroms (222) verwendeten Verbrennungsluft-Teilstroms (231) an diese und/oder an diesen übertragen wird.

9. Rauchgasentstickungsverfahren nach Anspruch 8, **dadurch gekennzeichnet, dass** der Volumenanteil des zur Verdampfung und/oder zur Verdünnung des dem Rohgas-Rauchgasmassenstrom (121) zuzuführenden Reduktionsmittelmassenstroms (222) des Reduktionsmittels (221) verwendeten Verbrennungsluft-Teilstroms (231) in Bezug auf den Gesamtvolumenstrom der dem Kessel oder Dampferzeuger (110) zuzuführenden Verbrennungsluft (141), insbesondere während eines Volllastbetriebs des Kraftwerks, auf einen konstanten Wert eingestellt wird.

10. Rauchgasentstickungsverfahren nach einem der vorhergehenden Ansprüche, **dadurch gekennzeichnet, dass** der Volumenanteil des zur Verdampfung und/oder zur Verdünnung des dem Rohgas-Rauchgasmassenstrom (121) zuzuführenden Reduktionsmittelmassenstroms (222) des Reduktionsmittels (221) verwendeten Verbrennungsluft-Teilstroms (231) in Bezug auf den Gesamtvolumenstrom der dem Kessel oder Dampferzeuger (110) zuzuführenden Verbrennungsluft (141), insbesondere während eines Teillastbetriebs und/oder verschiedener Betriebsphasen des Kraftwerks (100), in Abhängigkeit des jeweils zur Entstickung des Rohgas-Rauchgasmassenstroms (121) benötigten Reduktionsmittelmassenstroms (222) geregelt und/oder eingestellt wird.

11. Rauchgasentstickungsverfahren nach einem der vorhergehenden Ansprüche, **dadurch gekennzeichnet, dass** zusätzlich zu dem vorgewärmten Verbrennungsluft-Teilstrom (231) Verdünnungs- und/oder Trägerluft (271) zur Verdünnung und/oder Förderung des Reduktionsmittelmassenstroms (222) des Reduktionsmittels in diesen eingeleitet und/oder eingedüst wird.

12. Rauchgasentstickungsanlage (200), die zur Durchführung des Verfahrens nach einem der Ansprüche 1 - 11, in ein Rauchgas erzeugendes Kraftwerk (100) integriert ist, umfassend einen, insbesondere selektiv katalytisch arbeitenden Rauchgasentstickungsreaktor (210), der rauchgasausgangsseitig zu einem mit einem kohlenstoffhaltigen Brennstoff befeuerbaren oder befeuerten Kessel oder Dampferzeuger (110) des Kraftwerks (100) angeordnet ist, eine zur Zuführung eines Reduktionsmittels (221), insbesondere eines Ammoniak oder Harnstoff enthaltenden Reduktionsmittels (221), vorgesehene Reduktionsmittelleitung (220) und eine, in Rauchgasströmungsrichtung (R) stromaufwärts des Rauchgasentstickungsreaktors (210) angeordnete Reduktionsmittel-Einspeisung (240) zur Einleitung und/oder Eindüsung des Reduktionsmittels (221) in einen zur fluidleitenden Verbindung zwischen dem Kessel oder Dampferzeuger (110) und dem Rauchgasentstickungsreaktor (210) ausgebildeten Rauchgaskanal (120),
**dadurch gekennzeichnet,**
**dass** zwischen der Reduktionsmittel-Einspeisung (240) und einer oder mehreren in einem zur Zuführung von Verbrennungsluft (141) zu dem Kessel oder Dampferzeuger (110) ausgebildeten Verbrennungsluftkanal (140) angeordneten Luftvorwärmeinheiten (130, 130') oder zwischen der Reduktionsmittel-Einspeisung (240) und dem Verbrennungsluftkanal (140), in Luftströmungsrichtung (L) stromabwärts dieser einen oder mehreren Luftvorwärmeinheiten (130, 130'), eine fluidleitende Verbrennungsluft-Teilstromleitung (230) ausgebildet ist, die zur Zuführung des Reduktionsmittels (221) als Bestandteil eines vorgewärmten Verbrennungsluft-Teilstroms (231) mit der Reduktionsmittelleitung (220) in fluidleitender Verbindung steht.

13. Rauchgasentstickungsanlage (200) nach Anspruch 12, **dadurch gekennzeichnet, dass** sie eine mit der Reduktionsmittelleitung (220) und der Verbrennungsluft-Teilstromleitung (230) in fluidleitender Verbindung stehende Verdampfungs- und/oder Zerstäubungseinheit (250) aufweist, in welcher das dem Rohgas-Rauchgasmassenstrom (121) zuzuführende Reduktionsmittel (221) oder der dem Rohgas-Rauchgasmassenstrom (121) zuzuführende Reduktionsmittelmassenstrom (222) des Reduktionsmittels (221) mittels des vorgewärmten Verbrennungsluft-Teilstroms (231) verdampfbar und/oder verdünnbar ist.

14. Rauchgasentstickungsanlage (200) nach Anspruch 13, **dadurch gekennzeichnet, dass** das Reduktionsmittel (221) oder der das Reduktionsmittel (221) enthaltende Reduktionsmittelmassenstrom (222) mittels der Verdampfungs- und/oder Zerstäubungseinheit (250) in den vorgewärmten Verbrennungsluft-Teilstrom (231) einleitbar und/oder eindüsbar ist, wobei eine in dem vorgewärmten Verbrennungsluft-Teilstrom (231) enthaltene Wärmeenergie direkt und unmittelbar an das Reduktionsmittel (221) oder den Reduktionsmittelmassenstrom (222) des Reduktionsmittels (221) übertragbar und/oder der Reduktionsmittelmassenstrom (222) verdünnbar ist.

15. Rauchgasentstickungsanlage (200) nach Anspruch 13 oder 14, **dadurch gekennzeichnet, dass** die zur Führung des Verbrennungsluft-Teilstroms (231) vorgesehene Verbrennungsluft-Teilstromleitung (230) und die zur Zuführung des Reduktionsmittelmassenstroms (222) des Reduktionsmittels (221) vorgesehene Reduktionsmittelleitung (220) in die Verdampfungs- und/oder Zerstäubungseinheit (250) münden und derart ausgestaltet sind, das der dem Rohgas-Rauchgasmassenstrom (121) zuzuführende Reduktionsmittelmassenstrom (222) des Reduktionsmittels (221) in die Verdampfungs- und/oder Zerstäubungseinheit (250) eingespritzt und/oder innerhalb dieser zerstäubt wird und/oder das in dem Reduktionsmittelmassenstrom (222) enthaltene Reduktionsmittel (221) durch Inkontaktbringen mit dem der Verdampfungs- und/oder Zerstäubungseinheit (250) zugeführten Verbrennungsluft-Teilstrom (231) innerhalb der Verdampfungs- und/oder Zerstäubungseinheit (250) zerstäubt und/oder verdampft und/oder der Reduktionsmittelmassenstrom (222) verdünnt wird.

16. Rauchgasentstickungsanlage (200) nach einem der Ansprüche 12 - 15, **dadurch gekennzeichnet, dass** die Verbrennungsluft-Teilstromleitung (230) eine Fördereinrichtung (260), insbesondere ein Gebläse, zur Förderung des Verbrennungsluft-Teilstroms (231) aufweist, die derart ausgebildet ist, dass ein zwischen der Reduktionsmittel-Einspeisung (240) und der einen oder den mehreren in dem zur Zuführung von Verbrennungsluft (141) zu dem Kessel oder Dampferzeuger (110) ausgebildeten Verbrennungsluftkanal (140) angeordneten Luftvorwärmeinheiten (130, 130') oder ein in Luftströmungsrichtung (L) stromabwärts dieser einen oder mehreren Luftvorwärmeinheiten (130, 130') zwischen der Reduktionsmittel-Einspeisung (240) und dem Verbrennungsluftkanal (140)vorliegender Druckunterschied örtlich erhöht und/oder ein bei der Einleitung und/oder Eindüsung des Verbrennungsluft-Teilstroms (231) in die Verdampfungs- und/oder Zerstäubungseinheit auftretender Druckverlust und/oder Druckabfall ausgeglichen wird.

17. Rauchgasentstickungsanlage (200) nach einem der Ansprüche 12 - 16, **dadurch gekennzeichnet, dass** in der Verbrennungsluft-Teilstromleitung (231) eine Regelungsvorrichtung, insbesondere eine Regelklappe und/oder ein Stellventil, angeordnet ist, mittels welcher der zur Verdampfung und/oder zur Verdünnung des dem Rohgas-Rauchgasmassenstrom (121) zuzuführenden Reduktionsmittelmassenstroms (222) des Reduktionsmittels (221) vom Gesamtvolumenstrom der dem Kessel oder Dampferzeuger (110) zuzuführenden Verbrennungsluft (141) abzuzweigende Volumen- oder Volumenstrom- oder Massenstromanteil des Verbrennungsluft-Teilstroms (231) regelbar und/oder einstellbar ist.

18. Rauchgasentstickungsanlage nach einem der Ansprüche 12 - 17, **dadurch gekennzeichnet, dass** der oder die Luftvorwärmeinheiten (130, 130') als, insbesondere im Gegenstromprinzip arbeitende, regenerative Wärmeübertrager ausgebildet sind und der Rauchgaskanal (120) eine fluidleitende Verbindung zwischen dem Rauchgasentstickungsreaktor (210) und der einen oder den mehreren Luftvorwärmeinheiten (130, 130') ausbildet, sodass ein Wärmeenergiegehalt eines aus dem Rauchgasentstickungsreaktor (210) austretenden, entstickten Reingas-Rauchgasmassenstroms (122) zumindest teilweise zum Vorwärmen der dem Kessel und/oder Dampferzeuger (110) des Kraftwerks (100) zuzuführenden Verbrennungsluft (141) an diese und/oder zum Vorwärmen des zur Verdampfung und/oder zur Verdünnung des Reduktionsmittelmassenstroms (222) an Reduktionsmittel (221) dem Reduktionsmittelmassenstrom (222) zuzuführenden Verbrennungsluft-Teilstroms (231) an diesen übertragbar ist.
